# EUROPEAN PATENT SPECIFICATION

(11) **EP 4 160 938 B1**
(45) Date of publication and mention of the grant of the patent: **07.05.2025**
(21) Application number: 22198815.7
(22) Date of filing: 29.09.2022
(51) Int. Cl.: H04B 7/185, H04W 56/00

(54) **USER EQUIPMENT AND METHOD FOR MAINTAINING UPLINK (UL) SYNCHRONIZATION IN A NON-TERRESTRIAL NETWORK (NTN)**
BENUTZERGERÄT UND VERFAHREN ZUR AUFRECHTERHALTUNG DER UPLINK (UL)-SYNCHRONISATION IN EINEM NICHT TERRESTRISCHEN NETZWERK (NNTN)
ÉQUIPEMENT UTILISATEUR ET PROCÉDÉ POUR MAINTENIR UNE SYNCHRONISATION DE LIAISON MONTANTE (UL) DANS UN RÉSEAU NON TERRESTRE (NTN)

(30) Priority: 30.09.2021 US 202163250962 P
(43) Date of publication of application: 05.04.2023
(73) Proprietor: Sharp Kabushiki Kaisha, Sakai-shi, Osaka 590-8522 (JP)
(72) Inventor: CHENG, CHIEN-CHUN, Taipei 114 (TW); LI, YEN-HUA, Taipei 114 (TW); TSAI, HSIN-HSI, Taipei 114 (TW); TSENG, YUNG-LAN, Taipei 114 (TW); WANG, HAI-HAN, Taipei 114 (TW)
(74) Representative: Müller Hoffmann & Partner

(56) References cited:
- MODERATOR (THALES): "FL Summary #1 on enhancements on UL time and frequency synchronization for NR NTN", vol. RAN WG1, no. e-Meeting; 20210816 - 20210827, 17 August 2021 (2021-08-17), XP052041770, Retrieved from the Internet <URL:https://ftp.3gpp.org/tsg_ran/WG1_RL1/TSGR1_106-e/Inbox/R1-2106781.zip R1-2106781.docx> [retrieved on 20210817]
- NOKIA ET AL: "Time and frequency synchronization for NR over NTN", vol. RAN WG1, no. e-Meeting; 20210816 - 20210827, 6 August 2021 (2021-08-06), XP052033766, Retrieved from the Internet <URL:https://ftp.3gpp.org/tsg_ran/WG1_RL1/TSGR1_106-e/Docs/R1-2108091.zip R1-2108091.docx> [retrieved on 20210806]
- ASIA PACIFIC TELECOM ET AL: "UL time and frequency synchronization in NTN", vol. RAN WG1, no. e-Meeting; 20210412 - 20210420, 7 April 2021 (2021-04-07), XP052177726, Retrieved from the Internet <URL:https://ftp.3gpp.org/tsg_ran/WG1_RL1/TSGR1_104b-e/Docs/R1-2102733.zip R1-2102733 UL time and frequency synchronization in NTN.docx> [retrieved on 20210407]
- QUALCOMM INCORPORATED: "BWP operation and other issues for NTN", vol. RAN WG1, no. e-Meeting; 20210816 - 20210827, 6 August 2021 (2021-08-06), XP052033554, Retrieved from the Internet <URL:https://ftp.3gpp.org/tsg_ran/WG1_RL1/TSGR1_106-e/Docs/R1-2107344.zip R1-2107344 BWP operation and other issues for NTN.docx> [retrieved on 20210806]

## Description

### FIELD

The present disclosure is related to wireless communication and, more specifically, to user equipment and method for maintaining uplink (UL) synchronization in a non-terrestrial network (NTN).

### BACKGROUND

Various efforts have been made to improve different aspects of wireless communication for cellular wireless communication systems, such as 5^{th} Generation (5G) New Radio (NR), by improving data rate, latency, reliability, and mobility. The 5G NR system is designed to provide flexibility and configurability to optimize network services and types, accommodating various use cases, such as enhanced Mobile Broadband (eMBB), massive Machine-Type Communication (mMTC), and Ultra-Reliable and Low-Latency Communication (URLLC). However, as the demand for radio access continues to increase, there exists a need for further improvements in the art.

MODERATOR (THALES), "FL Summary #1 on enhancements on UL time and frequency synchronization for NR NTN", 3GPP DRAFT; R1-2106781, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20210816 - 20210827 17 August 2021 (2021-08-17), XP052041770 relates to issues regarding UL time and frequency synchronization in NR NTN.

NOKIA ET AL, "Time and frequency synchronization for NR over NTN", 3GPP DRAFT; R1-2108091, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20210816 - 20210827 6 August 2021 (2021-08-06), XP052033766 relates to time and frequency synchronization for NR over NTN.

ASIA PACIFIC TELECOM ET AL, "UL time and frequency synchronization in NTN", GPP DRAFT; R1-2102733, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20210412 - 20210420 7 April 2021 (2021-04-07), XP052177726 relates to UL time and frequency synchronization in NTN.

QUALCOMM INCORPORATED, "BWP operation and other issues for NTN", 3GPP DRAFT; R1-2107344, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20210816 - 20210827 6 August 2021 (2021-08-06), XP052033554 relates to BWP operations and other issues for NTN.

### SUMMARY

The invention is defined by the appended claims. The following aspects may include some but not all features as literally defined in the claims and are present for illustration purposes only.

The present disclosure is related to a UE and a method for maintaining UL synchronization in an NTN.

### BRIEF DESCRIPTION OF THE DRAWINGS

Aspects of the present disclosure are best understood from the following detailed disclosure when read with the accompanying drawings. Various features are not drawn to scale. Dimensions of various features may be arbitrarily increased or reduced for clarity of discussion.
FIG. 1 is a diagram illustrating a satellite access architecture, according to an example implementation of the present disclosure.
FIG. 2 is a diagram illustrating a transparent-payload-based communication, according to an example implementation of the present disclosure.
FIG. 3 is a diagram illustrating a validity timer configured via a SIB, according to an example implementation of the present disclosure.
FIG. 4 is a diagram illustrating a validity timer configured via a SIB, according to another example implementation of the present disclosure.
FIG. 5 is a diagram illustrating multiple validity timers configured by the network, according to an example implementation of the present disclosure.
FIG. 6 is a flowchart illustrating a method/process performed by a UE for maintaining UL synchronization in an NTN, according to an example implementation of the present disclosure.
FIG. 7 is a block diagram illustrating a node for wireless communication, in accordance with various aspects of the present disclosure.

### DESCRIPTION

Some of the abbreviations used in this disclosure include:
- Abbreviation: Full name
- 3GPP: 3^{rd} Generation Partnership Project
- 5G: 5^{th} Generation
- ACK: Acknowledgment
- BBU: Base Band Unit
- BS: Base Station
- BWP: Bandwidth Part
- C-RNTI: Cell Radio Network Temporary Identifier
- CA: Carrier Aggregation
- CG: Configured Grant
- CRC: Cyclic Redundancy Check
- CS-RNTI: Configured Scheduling Radio Network Temporary Identifier
- CSI: Channel State Information
- CSI-RS: Channel State Information Reference Signal
- DC: Dual Connectivity
- DCI: Downlink Control Information
- DL: Downlink
- DM-RS: Demodulation Reference Signal
- eMTC: enhanced Machine Type Communication
- E-UTRA: Evolved Universal Terrestrial Radio Access
- FoV: Field of View
- FR: Frequency Range
- GEO: Geostationary Earth Orbiting
- GNSS: Global Navigation Satellite System
- GW: Gateway
- HARQ: Hybrid Automatic Repeat Request
- HARQ-ACK: HARQ Acknowledgement
- ID: Identifier
- IE: Information Element
- IoT: Internet of Things
- LEO: Low Earth Orbiting
- LTE: Long-Term Evolution
- MAC: Medium Access Control
- MAC CE: MAC Control Element
- MCG: Master Cell Group
- MCS: Modulation Coding Scheme
- MN: Master Node
- MPE: Maximum Permissible Exposure
- NB-IoT: Narrowband Internet of Things
- NR: New Radio
- NTN: Non-Terrestrial Network
- NW: Network
- OFDM: Orthogonal Frequency Division Multiplexing
- PCell: Primary Cell
- PDCCH: Physical Downlink Control Channel
- PDSCH: Physical Downlink Shared Channel
- PHY: Physical (layer)
- PRACH: Physical Random Access Channel
- PUCCH: Physical Uplink Control Channel
- PUSCH: Physical Uplink Shared Channel
- RA: Random Access
- RAN: Radio Access Network
- Rel: Release
- RF: Radio Frequency
- RNTI: Radio Network Temporary Identifier
- RRC: Radio Resource Control
- RS: Reference Signal
- RTT: Round Trip Time
- SCell: Secondary Cell
- SCG: Secondary Cell Group
- SI: System Information
- SIB: System Information Block
- SN: Secondary Node
- SRI: SRS Resource Indicator
- SRS: Sounding Reference Signal
- TA: Timing Alignment
- TAG: Timing Alignment Group
- TAT: Timing Alignment Timer
- TB: Transport Block
- TCI: Transmission Configuration Indicator
- TPC: Transmission Power Control
- TRP: Transmission Reception Point
- TS: Technical Specification
- TTCM: Telemetry, Tracking, Command, and Monitoring
- Tx: Transmission
- UE: User Equipment
- UL: Uplink
- URLLC: Ultra-Reliable and Low-Latency Communication
- VSAT: Very Small Aperture Terminal

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

Unless noted otherwise, like or corresponding elements among the drawings may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not illustrated) by the same numerals in the drawings. However, the features in different implementations may be different in other respects and shall not be narrowly confined to what is illustrated in the drawings.

References to "one implementation," "an implementation," "example implementation," "various implementations," "some implementations," "implementations of the present disclosure," etc., may indicate that the implementation(s) of the present disclosure so described may include a particular feature, structure, or characteristic, but not every possible implementation of the present disclosure necessarily includes the particular feature, structure, or characteristic. Further, repeated use of the phrase "in one implementation," or "in an example implementation," "an implementation," do not necessarily refer to the same implementation, although they may. Moreover, any use of phrases like "implementations" in connection with "the present disclosure" are never meant to characterize that all implementations of the present disclosure must include the particular feature, structure, or characteristic, and should instead be understood to mean "at least some implementations of the present disclosure" includes the stated particular feature, structure, or characteristic. The term "coupled" is defined as connected, whether directly or indirectly through intervening components, and is not necessarily limited to physical connections. The term "comprising," when utilized, means "including, but not necessarily limited to"; it specifically indicates open-ended inclusion or membership in the so-described combination, group, series, and the equivalent.

The expression "at least one of A, B and C" or "at least one of the following: A, B and C" means "only A, or only B, or only C, or any combination of A, B, and C." The terms "system" and "network" may be used interchangeably. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

For the purposes of explanation and non-limitation, specific details, such as functional entities, techniques, protocols, and standards, are set forth for providing an understanding of the disclosed technology. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software, or a combination of software and hardware. Disclosed functions may correspond to modules which may be software, hardware, firmware, or any combination thereof.

A software implementation may include computer-executable instructions stored on a computer-readable medium, such as memory or other type of storage devices. One or more microprocessors or general-purpose computers with communication processing capability may be programmed with corresponding executable instructions and perform the disclosed network function(s) or algorithm(s).

The microprocessors or general-purpose computers may include Application-Specific Integrated Circuits (ASICs), programmable logic arrays, and/or one or more Digital Signal Processor (DSPs). Although some of the disclosed implementations are oriented to software installed and executing on computer hardware, alternative implementations implemented as firmware, as hardware, or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication network architecture such as a Long-Term Evolution (LTE) system, an LTE-Advanced (LTE-A) system, an LTE-Advanced Pro system, or a 5G NR Radio Access Network (RAN) typically includes at least one base station (BS), at least one UE, and one or more optional network elements that provide connection within a network. The UE communicates with the network such as a Core Network (CN), an Evolved Packet Core (EPC) network, an Evolved Universal Terrestrial RAN (E-UTRAN), a 5G Core (5GC), or an internet via a RAN established by one or more BSs.

A UE may include but is not limited to a mobile station, a mobile terminal or device, or a user communication radio terminal. The UE may be a portable radio equipment that includes but is not limited to a mobile phone, a tablet, a wearable device, a sensor, a vehicle, or a Personal Digital Assistant (PDA) with wireless communication capability. The UE is configured to receive and transmit signals over an air interface to one or more cells in a RAN.

The BS may be configured to provide communication services according to at least a Radio Access Technology (RAT), such as Worldwide Interoperability for Microwave Access (WiMAX), Global System for Mobile communications (GSM) that is often referred to as 2G, GSM Enhanced Data rates for GSM Evolution (EDGE) RAN (GERAN), General Packet Radio Service (GPRS), Universal Mobile Telecommunication System (UMTS) that is often referred to as 3G based on basic wideband-code division multiple access (W-CDMA), high-speed packet access (HSPA), LTE, LTE-A, evolved LTE (eLTE) that is LTE connected to 5GC, NR (often referred to as 5G), and/or LTE-A Pro. However, the scope of the present disclosure is not limited to these protocols.

The BS may include but is not limited to a node B (NB) in the UMTS, an evolved node B (eNB) in LTE or LTE-A, a radio network controller (RNC) in UMTS, a BS controller (BSC) in the GSM/GERAN, an ng-eNB in an Evolved Universal Terrestrial Radio Access (E-UTRA) BS in connection with 5GC, a next generation Node B (gNB) in the 5G-RAN, or any other apparatus capable of controlling radio communication and managing radio resources within a cell. The BS may serve one or more UEs via a radio interface.

The BS is operable to provide radio coverage to a specific geographical area using a plurality of cells forming the RAN. The BS supports the operations of the cells. Each cell is operable to provide services to at least one UE within its radio coverage.

Each cell (often referred to as a serving cell) provides services to serve one or more UEs within its radio coverage such that each cell schedules the DL and optionally UL resources to at least one UE within its radio coverage for DL and optionally UL packet transmissions. The BS may communicate with one or more UEs in the radio communication system via the plurality of cells.

A cell may allocate sidelink (SL) resources for supporting Proximity Service (ProSe) or Vehicle to Everything (V2X) service. Each cell may have overlapped coverage areas with other cells.

In Multi-RAT Dual Connectivity (MR-DC) cases, the primary cell of a Master Cell Group (MCG) or a Secondary Cell Group (SCG) may be called a Special Cell (SpCell). A Primary Cell (PCell) may refer to the SpCell of an MCG. A Primary SCG Cell (PSCell) may refer to the SpCell of an SCG. MCG may refer to a group of serving cells associated with the Master Node (MN), including the SpCell and optionally one or more Secondary Cells (SCells). An SCG may refer to a group of serving cells associated with the Secondary Node (SN), including the SpCell and optionally one or more SCells.

As previously disclosed, the frame structure for NR supports flexible configurations for accommodating various next-generation (e.g., 5G) communication requirements, such as Enhanced Mobile Broadband (eMBB), Massive Machine Type Communication (mMTC), and Ultra-Reliable and Low-Latency Communication (URLLC), while fulfilling high reliability, high data rate, and low latency requirements. The Orthogonal Frequency-Division Multiplexing (OFDM) technology in the 3GPP may serve as a baseline for an NR waveform. The scalable OFDM numerology, such as adaptive sub-carrier spacing, channel bandwidth, and Cyclic Prefix (CP), may also be used.

Two coding schemes are considered for NR, specifically Low-Density Parity-Check (LDPC) code and Polar Code. The coding scheme adaption may be configured based on channel conditions and/or service applications.

At least DL transmission data, a guard period, and a UL transmission data should be included in a transmission time interval (TTI) of a single NR frame. The respective portions of the DL transmission data, the guard period, and the UL transmission data should also be configurable based on, for example, the network dynamics of NR. SL resources may also be provided in an NR frame to support ProSe services or V2X services.

### Non-Terrestrial Network (NTN)

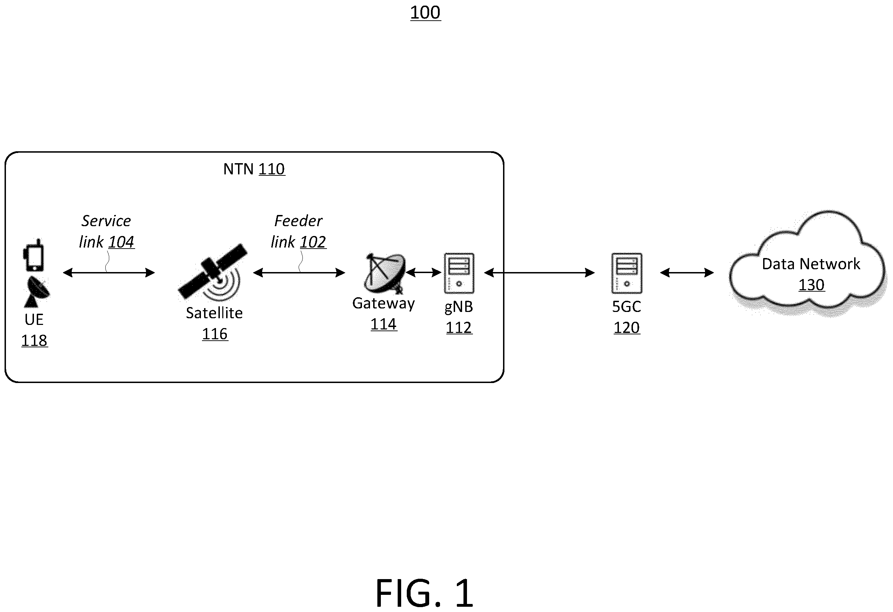

FIG. 1 is a diagram 100 illustrating a satellite access architecture according to an example implementation of the present disclosure. An NTN may refer to a NW, or segments of a NW, using a spaceborne vehicle for transmission, e.g., LEO or GEO satellites. As illustrated in FIG. 1, an NTN 110 may include a gNB 112, a GW 114, a satellite 116, and a UE 118.

A ground or earth station may include a Satellite-gateway (Sat-gateway) (e.g., the GW 114) and a TTCM unit. One or several Sat-gateways may be attached to a BS BBU or a gNB (e.g., the gNB 112) that connects the NTN to a core network (e.g., the 5GC 120) or an application server. Through the 5GC 120, the NTN 110 may be further connected to an external or public network (e.g., the data network 130). The BS BBU or the gNB 112 may be close to Sat-gateways (e.g., either co-located or a few kilometers apart), and antenna diversity may be required depending on geographical location and feeder-link frequency band.

The satellite 116 may be a GEO or non-GEO satellite. The satellite 116 may be part of a satellite constellation to ensure service continuity and may be served successively by one or several Sat-gateways. A satellite constellation controller may provide each BS with satellite system data (ephemeris, satellite position, and velocity, etc.). A feeder link 102 may refer to a radio link conveying information for a satellite mobile service between a Sat-gateway (e.g., the GW 114) and the satellite 116. A service link 104 may refer to a radio link between the UE 118 and the satellite 116.

The satellite 116 may implement a transparent payload. The transparent payload may require processing, including RF filtering, frequency conversion, and amplification, to be performed on-board the satellite 116. Hence, the waveform signal repeated by the payload is unchanged except for frequency translation and transmission power. The satellite 116 may typically generate several spot-beams over a given service area bounded by its FoV or footprint. The footprints of the spot-beams may typically be of an elliptic shape.

The UE 118 may be a GNSS-capable UE, which may be a handheld device (e.g., an NR or LTE smartphone), an IoT device (e.g., an NB-IoT or eMTC device), a VSAT, or a moving platform (e.g., an aircraft, a vessel, and a building-mounted device).

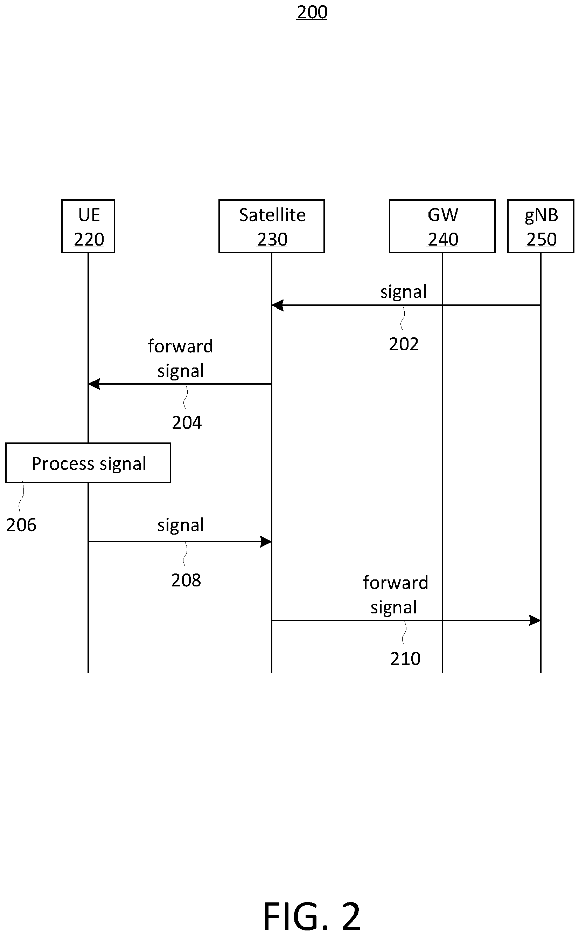

FIG. 2 is a diagram 200 illustrating a transparent-payload-based communication according to an example implementation of the present disclosure. In action 202, the gNB 250 transmits a signal (e.g., DL data for the UE 220) to the satellite 230 via the GW 240 over a feeder link. In action 204, the satellite 230 forwards the signal to the UE 220 over a service link. In action 206, the UE 220 processes the signal. In action 208, the UE 220 transmits a signal (e.g., UL data, or a response or acknowledgement to the DL data) to the satellite 230. In action 210, the satellite 230 forwards the signal to the gNB 250 via the GW 240.

### Validity timer for NR

A validity duration or a validity timer that is configured by the network for satellite ephemeris information may indicate the maximum time duration in which a UE can apply the satellite ephemeris information without having to acquire new satellite ephemeris information. The validity timer for satellite ephemeris information may be used in a case that a UE may need to renew the satellite ephemeris information every few minutes by reading a SIB, but the gNB may broadcast the satellite ephemeris information every few milliseconds (ms) to prevent any delay for initial access. That is, the validity timer plays a reminder role to help the UE maintain the satellite ephemeris information up-to-date.

An issue may relate to UE behavior upon expiration of the validity timer. If a UE has no valid satellite ephemeris information, which may lead to a failure of the open-loop timing control, the UE may maintain UL timing based on the closed-loop timing control and DL reference signal. However, for UL frequency control, since there is no closed-loop frequency control and no common DL Doppler compensation, a UE loses UL synchronization once the validity timer expires. If a UE has lost UL frequency pre-compensation, the NW or UE may trigger an RA procedure to rebuild UL synchronization. In some implementations, no UL configuration or UL timing (also referred to as N_TA in the present disclosure) needs to be maintained or stored if an RA procedure is triggered to rebuild UL synchronization.

In some implementations, a UE may clear configured UL resources and N_TA when the validity timer for satellite ephemeris information expires.

A UE may receive a validity timer configuration in a SIB, where the validity timer may be set to enabled or disabled, and the validity timer value may be given by absolute time, e.g., seconds. The timer values may include zero, non-integer, infinity, and reserved values, e.g., s0, s0dot5, s1, s2, s3, s10, s20, s30, infinity, or spare. The validity timer may be an optional feature. If the field for the validity timer is absent, the UE may assume that the validity period (e.g., the time duration) is infinity.

A UE may start or restart the validity timer when the satellite ephemeris information is received via a SIB. A UE may stop the validity timer when the TAT stops or expires, or when the UE is out-of-sync. If the validity timer stops, a UE may stop the TAT and may not perform any UL transmission. If the validity timer expires, a UE may stop the TAT and clear configured UL resources. A UE may maintain or store the UE's TA and a scheduling offset for NTN (e.g., K_mac).

If a UE loses GNSS capability for a given period of time and the period is beyond a threshold controlled by the network, the validity timer may be stopped to prevent any UL transmission. If the TAT is not running or if the validity timer is not running, a UE may not perform UL transmission. If the TAT or the validity timer expires, a UE may clear configured UL resources and maintain the UE's TA and K_mac. In a case that different types of satellite ephemeris information are provided in a serving cell, a UE may restart the validity timer if the type of received satellite ephemeris information is the same as the type of previous (maintained) satellite ephemeris information. Otherwise (e.g., if the type of received satellite ephemeris information is not the same as the type of previous (maintained) satellite ephemeris information), the UE may ignore the received satellite ephemeris information.

In some implementations, the UE may consider all timeAlignmentTimers as expired when a validity timer for satellite ephemeris information expires. In some implementations, when the validity timer expires, the UE may perform one or more of the following actions: (1) flushing all HARQ buffers for all serving cells and/or a serving cell that the validity timer is associated with; (2) notifying the RRC layer of the UE to release a PUCCH for all serving cells and/or a serving cell that the validity timer is associated with, if configured; (3) notifying the RRC layer of the UE to release an SRS for all serving cells and/or a serving cell that the validity timer is associated with, if configured; (4) clearing any configured downlink assignment and any configured uplink grant; (5) clearing any PUSCH resource for semi-persistent CSI reporting; (6) treating all running timeAlignmentTimers (e.g., timers associated with uplink synchronization) as expired; (7) maintaining N_TAs of all TAGs; (8) releasing PUCCH-CSI-Resources configured in a CSI-ReportConfig Information Element (IE); (9) releasing SchedulingRequestResourceConfig instances configured in a PUCCH-Config IE; (10) releasing SRS-Resource instances configured in an SRS-Config IE.

In some implementations, a UE may not transmit any UL channels, e.g., PUSCH, PUCCH, or SRS, when the validity timer is not running (e.g., upon expiration of the validity timer).

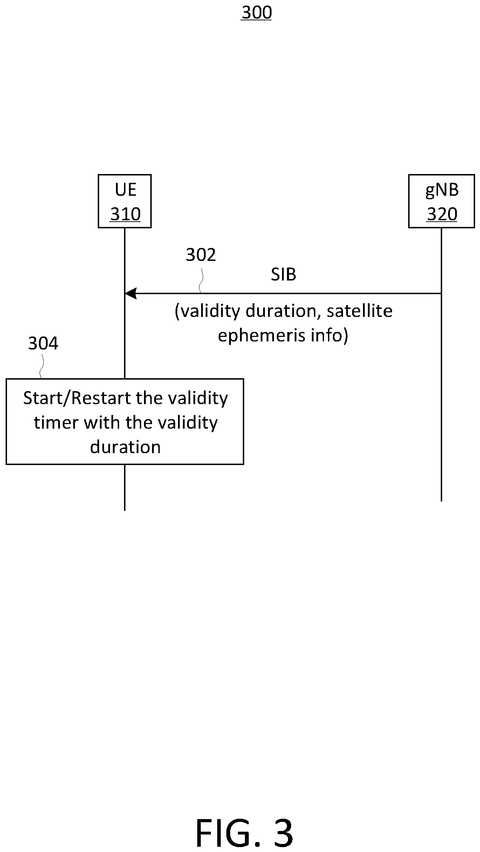

FIG. 3 is a diagram 300 illustrating a validity timer configured via a SIB according to an example implementation of the present disclosure. In action 302, a UE 310 may receive a SIB including a validity duration (e.g., the duration of a validity timer) and satellite ephemeris information from a gNB 320. In action 304, the UE 310 may start or restart the validity timer with the validity duration.

### Epoch time for serving satellite ephemeris

The intention to provide the epoch time is for a UE to predict the satellite's location. To save signaling overhead, the epoch time may be implicitly known as a reference time defined by the starting time of a reference DL slot and/or frame. An issue may relate to whether this DL slot or frame is configurable.

Rel-17 NTNs support GEO and non-GEO satellites with a range of RTT from 500ms to 20ms, and therefore, a configurable DL slot or frame seems reasonable to accommodate the range of RTT. However, it is unclear whether the indicated DL slot has an impact on the start of the validity timer.

In some implementations, for epoch time, the starting time of a DL slot and/or frame is given by a predefined rule or indicated by the network. The validity timer may start on the DL slot or the frame controlled by the network.

A UE may receive the satellite ephemeris information in a SIB. The satellite ephemeris information may have an epoch time defined by the starting of a DL slot or frame configured by the gNB. A UE may receive a validity timer configuration in a SIB. The validity timer has a validity period (also referred to as validity duration in the present disclosure) for the received satellite ephemeris information.

A UE may start or restart the validity timer at the starting time of a DL slot and/or frame in which the UE receives the satellite ephemeris information if a reference DL slot and/or frame for epoch time is absent. A UE may start or restart the validity timer at the starting time of a reference DL slot and/or frame that is indicated by the network for epoch time as a part of the satellite ephemeris information in a SIB (e.g., an NTN-specific SIB). An NTN-specific SIB used in the 5G NR may be different from an NTN-specific SIB used in the 4G LTE, such as having different SIB indexes. If the reference DL slot and/or frame is in the past, a UE may assume that the validity timer has started at the indicated slot in the past. In such case, the validity duration may be shorter than the configured length in the SIB.

If the reference DL slot and/or frame is in the future, a UE may assume that the validity timer will be started or restarted at the indicated slot in the future, e.g., the validity timer started previously may expire before the indicated slot. In this case, the UE may assume that the validity timer is valid during the period before the indicated slot and after the slot in which the UE received the satellite ephemeris information.

In some implementations, a UE may transmit UL channels, including a PRACH, if the satellite ephemeris information is valid.

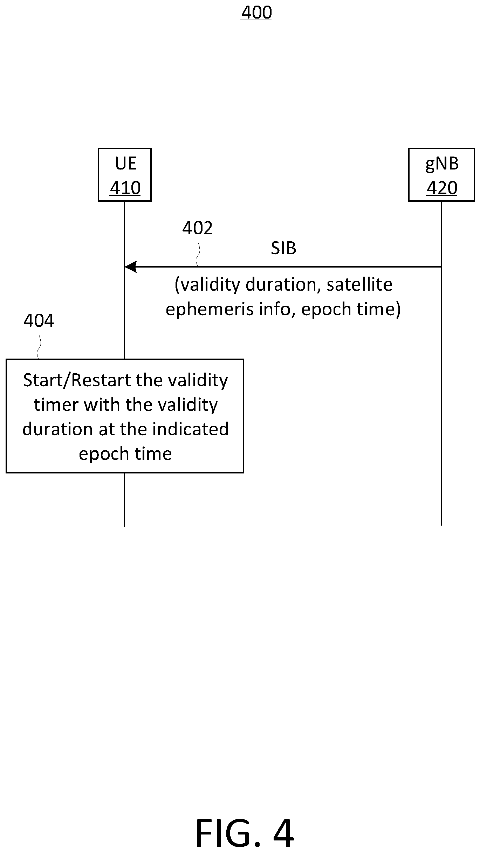

FIG. 4 is a diagram 400 illustrating a validity timer configured via a SIB according to another example implementation of the present disclosure. In action 402, a UE 410 may receive a SIB including a validity duration (e.g., the duration of a validity timer), satellite ephemeris information, and an epoch time from a gNB 420. In action 404, the UE 410 may start or restart the validity timer with the validity duration at the indicated epoch time.

### Validity timer for UL synchronization for IoT

The validity timer may be used to stop UL transmission when there is no valid satellite ephemeris information or no valid common TA parameters. Two issues may relate to: (1) whether a single validity timer or separate validity timers are used for satellite ephemeris information and common TA parameters; and (2) details of the precise (re-)starting time for the validity timer for UL synchronization to ensure a common understanding between a gNB and a UE.

For one or multiple validity timers, when only UL timing is considered, UL timing is controlled by the closed-control and open-control loops. If the satellite ephemeris information or the common TA parameters is/are not valid, a UE may lose the open-control loop. Maintaining both satellite ephemeris information and common TA parameters and having a single timer for both satellite ephemeris information and common TA parameters may result in difficulty in defining precise (re-)starting time. Separate validity timers for satellite ephemeris information and common TA parameters may be provided.

If one of the validity timers is not running, a UE in the RRC_CONNECTED state may transition to the idle state (e.g., RRC_IDLE). This is because if a UE loses the open-control loop and relies solely on the closed-control loop to maintain UL synchronization, this may lead to a signaling overhead penalty. To align with the validity of GNSS, a UE in the RRC_CONNECTED state may go back to the RRC_IDLE state if the validity timer is not running. If GNSS is not valid, a UE in the RRC_CONNECTED state may transition to the RRC_IDLE state.

If separate validity timers are supported, the precise (re-)starting time for the validity timer for satellite ephemeris information may be the time when the satellite ephemeris information is received, and the precise (re-)starting time for the validity timer for common TA parameters may be the time when the common TA parameters are received.

A UE may receive an ephemeris validity duration (e.g., a validity duration for the validity timer for satellite ephemeris information) within a configuration of ephemeris in a SIB to determine the validity period of the received configuration of ephemeris. The field of the ephemeris validity duration may be optional with a need code "Need S". When the field is absent, a UE may assume that the field value is infinity or a default value, e.g., 30 minutes. The unit of the field value may be in subframes, frames, or minutes.

A UE may receive a common TA validity duration (e.g., a validity duration for the validity timer for common TA parameters) within a configuration of common TA in a SIB to determine the validity period of the received common TA parameters. The field of the common TA validity duration may be optional with a need code "Need S". When the field is absent, a UE may assume that the field value is infinity or a default value, e.g., 30 seconds. The unit of the field value may be in slots or seconds. The default value may be the value provided by the ephemeris validity duration (timer). In some implementations, the UE may reuse the validity timer for satellite ephemeris information as the validity timer for common TA parameters.

The ephemeris validity timer (e.g., the validity timer for satellite ephemeris information) may be configured per cell. A UE may receive multiple ephemeris validity timers if multiple serving cells are configured. A UE may receive multiple ephemeris validity timers for neighboring cells if a neighboring cell's information is provided by the gNB via SIB(s) or RRC message(s).

The common TA validity timer (e.g., the validity timer for common TA parameters) may be configured per cell. A UE may receive multiple common TA validity timers if multiple serving cells are configured. A UE may receive multiple common TA validity timers for neighboring cells if a neighboring cell's information is provided by the gNB via SIB(s) or RRC message(s). However, a UE may ignore the common TA validity timers for the neighboring cells.

A UE starts or restarts the ephemeris validity timer(s) at the time when the satellite ephemeris information is received via a SIB or an RRC message. The ephemeris validity time starts at the end of the SI window during which the UE receives the satellite ephemeris information. If an epoch time is provided as a reference (sub-)frame number, the ephemeris validity timer starts at the end of the reference (sub-)frame. The UE determines the starting time for the ephemeris validity timer according to whether the epoch time is provided in the SIB. Specifically, in the case where the epoch time is not provided in the SIB, the ephemeris validity timer is started at the end of the SI window during which the UE receives the satellite ephemeris information. In the case where the epoch time is provided in the SIB, the ephemeris validity timer is started at the end of the reference (sub-)frame indicated by the epoch time. This may apply to both serving cells and neighboring cells. A UE may need to maintain multiple ephemeris validity timers when the satellite ephemeris information is provided for serving cells and neighboring cells.

A UE may start or restart the common TA validity timer(s) for the serving cells at the time when the common TA parameters are received via a SIB. The common TA validity timer may start at the end of the SI window during which the UE receives the common TA parameters. If an epoch time is provided as a reference (sub-)frame number, the common TA validity timer may start at the end of the reference (sub-)frame.

If the common TA parameters and the satellite ephemeris information share the same validity timer, a UE starts or restarts the validity timer when both the common TA parameters and the satellite ephemeris information for the serving cells are updated at least once. A UE updates the common TA parameters and the satellite ephemeris information by reading a SIB. If the satellite ephemeris information for neighboring cells is received via SIB(s) or RRC message(s), a UE may not start or restart the validity timer.

If the ephemeris validity timer or the common TA validity timer is not running, a UE may stop the TAT. If the ephemeris validity timer or the common TA validity timer expires, a UE may assume that the TAT expires. UE behaviors for the validity timers may be associated with the UE behaviors for the TAT.

When a UE moves from the RRC_CONNCTED state to the RRC_IDLE state and the validity timers are still running, the UE may maintain the validity timers even in the RRC_IDLE state until the validity timers expire. A UE may start or restart the validity timers in the RRC_IDLE state when a SIB is read. A UE may stop the validity timers or assume that the validity timers expire if GNSS validity is lost.

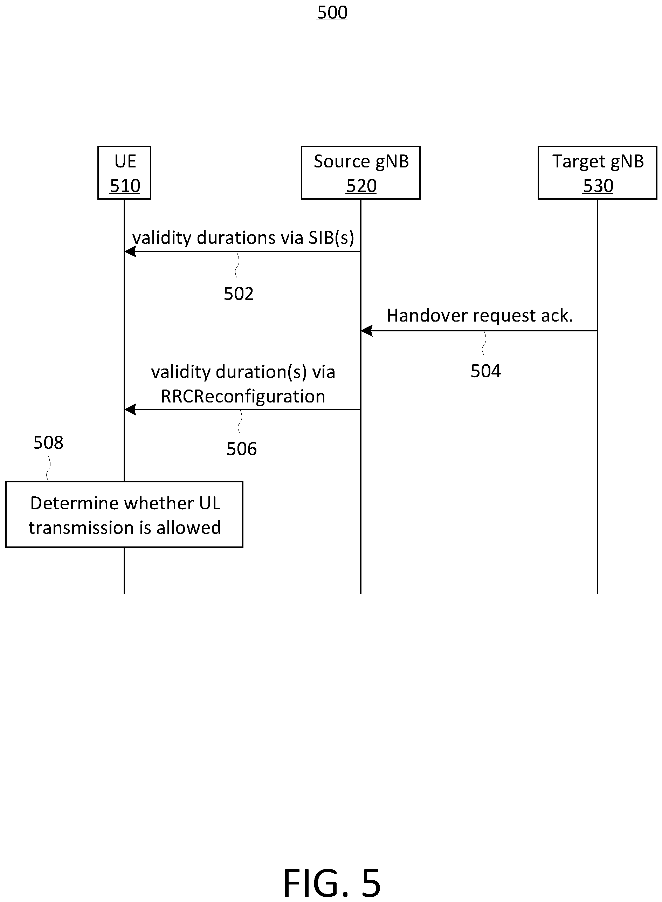

FIG. 5 is a diagram 500 illustrating multiple validity timers configured by the network according to an example implementation of the present disclosure. In action 502, a UE 510 may receive multiple validity durations (e.g., the durations of multiple validity timers) for serving cells and neighboring cells via SIB(s) from a source gNB 520. In action 504, the source gNB 520 may receive a handover request acknowledgement from a target gNB 530 (e.g., in a case that a handover request may be previously sent by the source gNB 520 to the target gNB 530 for triggering a handover of the UE 510 from the source gNB 520 to the target gNB 530). In action 506, the UE 510 may receive one or more validity durations for the target cell via an RRC Reconfiguration message. In action 508, the UE 510 may determine whether UL transmission is allowed based on the status of the validity timers, such as whether the validity timers are running (e.g., have not expired) or not running (e.g., have expired). For example, the UE 510 may determine that UL transmission is allowed when the validity timer(s) is/are running and determine that UL transmission is not allowed upon expiration of the validity timer(s).

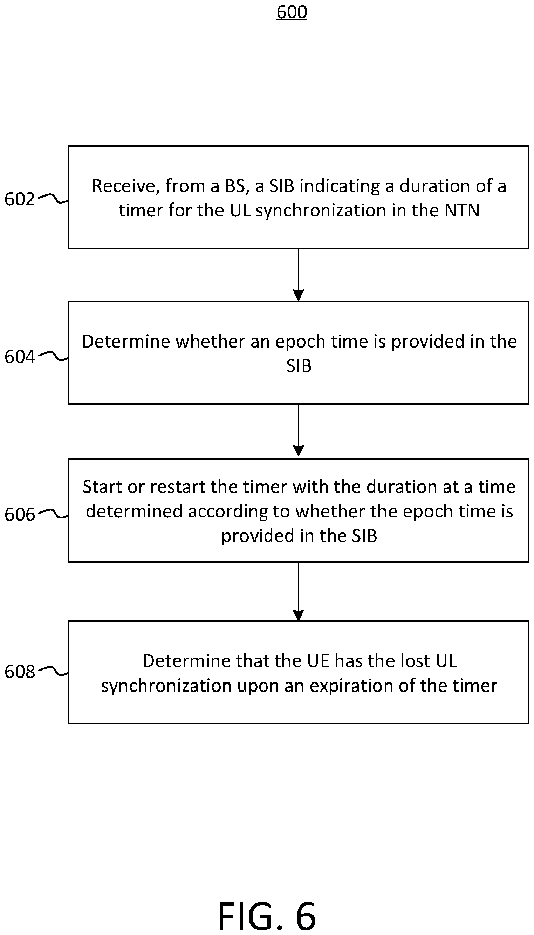

FIG. 6 is a flowchart illustrating a method/process 600 performed by a UE for maintaining UL synchronization in an NTN, according to an example implementation of the present disclosure. In action 602, the UE receives, from a BS, a SIB indicating a duration (e.g., a validity duration) of a timer (e.g., a validity timer) for the UL synchronization in the NTN. In action 604, the UE determines whether an epoch time is provided in the SIB. In action 606, the UE starts or restarts the timer with the duration at a time determined according to whether the epoch time is provided in the SIB. In action 608, the UE determines that the UE has the lost UL synchronization upon an expiration of the timer.

The timer is started or restarted from a subframe indicated by the epoch time in a case that the epoch time is provided in the SIB.

The timer is started or restarted at an end of an SI window during which the SIB is received in a case that the epoch time is not provided in the SIB.

In some implementations, the UE may flush all HARQ buffers upon the expiration of the timer.

In some implementations, the UE may not be allowed to perform any UL transmission upon the expiration of the timer.

In some implementations, the UE may perform, upon the expiration of the timer, at least one of: (1) notifying an RRC layer of the UE to release a PUCCH for at least one serving cell; (2) notifying the RRC layer of the UE to release an SRS for the at least one serving cell; (3) clearing any configured downlink assignment and any configured uplink grant; (4) clearing any PUSCH resource for semi-persistent CSI reporting; (5) treating other running timers associated with the UL synchronization as expired; (6) maintaining uplink timings of all TAGs; (7) releasing PUCCH-CSI-Resources configured in a CSI-ReportConfig IE; (8) releasing SchedulingRequestResourceConfig instances configured in a PUCCH-Config IE; or (9) releasing SRS-Resource instances configured in an SRS-Config IE.

In some implementations, the SIB may include satellite ephemeris information, and the UE may determine that the satellite ephemeris information is invalid upon the expiration of the timer.

In some implementations, the SIB may include a plurality of common TA parameters, and the UE may determine that the common TA parameters are invalid upon the expiration of the timer.

In some implementations, the UE may trigger an RA procedure to rebuild the UL synchronization upon the expiration of the timer.

In some implementations, the SIB comprises an NTN-specific SIB.

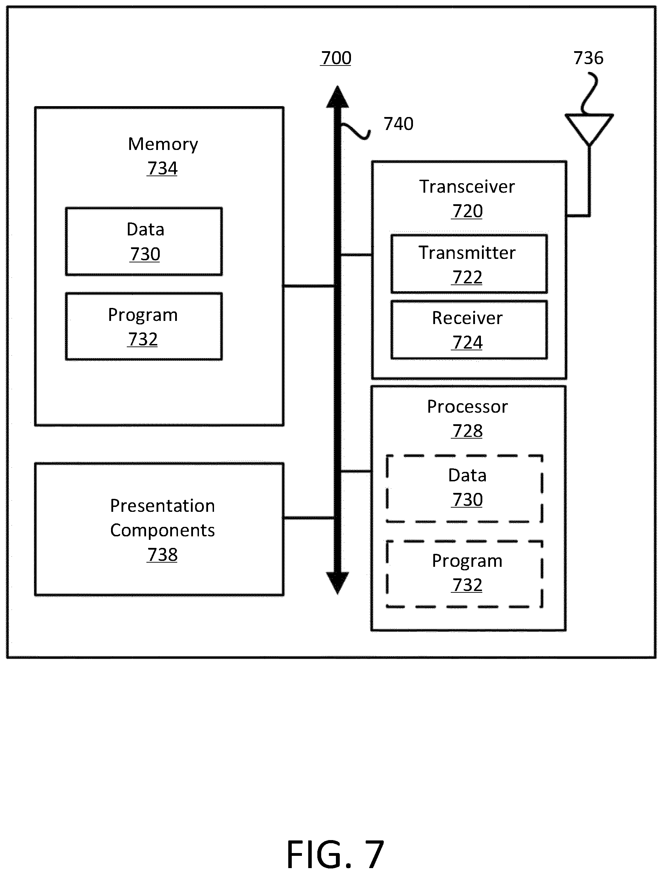

FIG. 7 is a block diagram illustrating a node 700 for wireless communication in accordance with various aspects of the present disclosure. As illustrated in FIG. 7, a node 700 may include a transceiver 720, a processor 728, a memory 734, one or more presentation components 738, and at least one antenna 736. The node 700 may also include an RF spectrum band module, a BS communications module, a network communications module, and a system communications management module, Input / Output (I/O) ports, I/O components, and a power supply (not illustrated in FIG. 7).

Each of the components may directly or indirectly communicate with each other over one or more buses 740. The node 700 may be a UE or a BS that performs various functions disclosed with reference to FIGS. 1 through 6.

The transceiver 720 has a transmitter 722 (e.g., transmitting/transmission circuitry) and a receiver 724 (e.g., receiving/reception circuitry) and may be configured to transmit and/or receive time and/or frequency resource partitioning information. The transceiver 720 may be configured to transmit in different types of subframes and slots including but not limited to usable, non-usable, and flexibly usable subframes and slot formats. The transceiver 720 may be configured to receive data and control channels.

The node 700 may include a variety of computer-readable media. Computer-readable media may be any available media that may be accessed by the node 700 and include volatile (and/or non-volatile) media and removable (and/or non-removable) media.

The computer-readable media may include computer-storage media and communication media. Computer-storage media may include both volatile (and/or non-volatile media), and removable (and/or non-removable) media implemented in any method or technology for storage of information such as computer-readable instructions, data structures, program modules, or data.

Computer-storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer-storage media may not include a propagated data signal. Communication media may typically embody computer-readable instructions, data structures, program modules, or other data in a modulated data signal, such as a carrier wave, or other transport mechanisms and include any information delivery media.

The term "modulated data signal" may mean a signal that has one or more of its characteristics set or changed in such a manner as to encode information in the signal. Communication media may include wired media, such as a wired network or direct-wired connection, and wireless media, such as acoustic, RF, infrared and other wireless media. Combinations of any of the previously listed components should also be included within the scope of computer-readable media.

The memory 734 may include computer-storage media in the form of volatile and/or non-volatile memory. The memory 734 may be removable, non-removable, or a combination thereof. Example memory may include solid-state memory, hard drives, optical-disc drives, etc. As illustrated in FIG. 7, the memory 734 may store a computer-readable and/or computer-executable program 732 (e.g., software codes) that are configured to, when executed, cause the processor 728 to perform various functions disclosed herein, for example, with reference to FIGS. 1 through 6. Alternatively, the program 732 may not be directly executable by the processor 728 but may be configured to cause the node 700 (e.g., when compiled and executed) to perform various functions disclosed herein.

The processor 728 (e.g., having processing circuitry) may include an intelligent hardware device, e.g., a Central Processing Unit (CPU), a microcontroller, an ASIC, etc. The processor 728 may include memory. The processor 728 may process the data 730 and the program 732 received from the memory 734, and information transmitted and received via the transceiver 720, the baseband communications module, and/or the network communications module. The processor 728 may also process information to send to the transceiver 720 for transmission via the antenna 736 to the network communications module for transmission to a CN.

One or more presentation components 738 may present data indications to a person or another device. Examples of presentation components 738 may include a display device, a speaker, a printing component, a vibrating component, etc.

## Claims

1. A method performed by a user equipment (118, 700), UE, for maintaining uplink, UL, synchronization in a non-terrestrial network, NTN (110), the method comprising:
receiving, from a base station (112), BS, a system information block, SIB, indicating a duration of a validity timer for the UL synchronization in the NTN (110);
determining whether an epoch time is provided in the SIB;
starting or restarting the validity timer with the duration at a time determined according to whether the epoch time is provided in the SIB, wherein the validity timer is started or restarted at an end of areference subframe indicated by the epoch time in a case that the epoch time is provided in the SIB, and the validity timer is started or restarted at an end of a system information, SI, window during which the SIB is received in a case that the epoch time is not provided in the SIB; and
determining that the UE (118, 700) has lost the UL synchronization upon an expiration of the validity timer.

2. The method of the preceding claim, further comprising:
flushing all hybrid automatic repeat request, HARQ, buffers upon the expiration of the validity timer.

3. The method of any of the preceding claims, wherein the UE (118, 700) is not allowed to perform any UL transmission upon the expiration of the validity timer.

4. The method of any of the preceding claims, further comprising:
performing, upon the expiration of the validity timer, at least one of:
notifying a Radio Resource Control, RRC, layer of the UE (118, 700) to release a physical uplink control channel, PUCCH, for at least one serving cell;
notifying the RRC layer of the UE (118, 700) to release a sounding reference signal, SRS, for the at least one serving cell;
clearing any configured downlink assignment and any configured uplink grant;
clearing any physical uplink shared channel, PUSCH, resource for semi-persistent channel state information, CSI, reporting;
treating other running timers associated with the UL synchronization as expired;
maintaining uplink timings of all timing alignment groups, TAGs;
releasing PUCCH-CSI-Resources configured in a CSI-ReportConfig Information Element, IE;
releasing SchedulingRequestResourceConfig instances configured in a PUCCH-Config IE; or
releasing SRS-Resource instances configured in an SRS-Config IE.

5. The method of any of the preceding claims, wherein the SIB comprises satellite ephemeris information, and the method further comprises:
determining that the satellite ephemeris information is invalid upon the expiration of the validity timer.

6. The method of any of the preceding claims, wherein the SIB comprises a plurality of common Timing Advance, TA, parameters, and the method further comprises:
determining that the common TA parameters are invalid upon the expiration of the validity timer.

7. The method of any of the preceding claims, further comprising:
triggering a random access, RA, procedure to rebuild the UL synchronization upon the expiration of the validity timer.

8. The method of any of the preceding claims, wherein the SIB comprises an NTN-specific SIB.

9. A user equipment (118, 700), UE, for maintaining uplink, UL, synchronization in a non-terrestrial network, NTN (110), the UE (118, 700) comprising:
one or more processors (728); and
at least one memory (734) coupled to at least one of the one or more processors (728), wherein the at least one memory (734) stores computer-executable instructions (732) that, when executed by the at least one of the one or more processors (728), cause the UE (700) to perform the method of any of claims 1 to 8.

## Patentansprüche

1. Verfahren, das von einem Nutzerendgerät (118, 700), UE, ausgeführt wird, um eine Uplink-, UL-, Synchronisation in einem nicht-terrestrischen Netzwerk, NTN (110), beizubehalten, wobei das Verfahren aufweist:
Empfangen, von einer Basisstation (112), BS, eines Systeminformationsblocks, SIB, der eine Dauer eines Gültigkeitszeitgebers für die UL-Synchronisation im NTN (110) angibt;
Bestimmen, ob eine Epochenzeit im SIB bereitgestellt wird;
Starten oder Neustarten des Gültigkeitszeitgebers mit der Dauer zu einer Zeit, die dementsprechend bestimmt wird, ob die Epochenzeit im SIB bereitgestellt wird, wobei der Gültigkeitszeitgeber an einem Ende eines durch die Epochenzeit angegebenen Referenz-Subframes gestartet oder neugestartet wird, falls die Epochenzeit im SIB bereitgestellt wird, und der Gültigkeitszeitgeber an einem Ende eines Systeminformations-, SI-, Fensters gestartet oder neugestartet wird, während dessen der SIB empfangen wird, falls die Epochenzeit im SIB nicht bereitgestellt wird; und
Bestimmen, dass das UE (118, 700) die UL-Synchronisation nach Ablauf des Gültigkeitszeitgebers verloren hat.

2. Verfahren nach dem vorhergehenden Anspruch, ferner aufweisend:
Leeren aller Hybrid-Automatic-Repeat-Request, HARQ-, Puffer nach dem Ablauf des Gültigkeitszeitgebers.

3. Verfahren nach einem der vorhergehenden Ansprüche, wobei dem UE (118, 700) nicht erlaubt wird, eine UL-Übertragung nach dem Ablauf des Gültigkeitszeitgebers durchzuführen.

4. Verfahren nach einem der vorhergehenden Ansprüche, ferner aufweisend:
Durchführen, nach dem Ablauf des Gültigkeitszeitgebers, zumindest eines der folgenden Schritte:
Benachrichtigen einer Funkressourcensteuerungs-, RRC- Schicht des UE (118, 700), um einen physikalischen Uplink-Steuerkanal, PUCCH, für zumindest eine Dienstzelle freizugeben;
Benachrichtigen der RRC-Schicht des UE (118, 700), um ein Sondierungsreferenzsignal, SRS, für die zumindest eine Dienstzelle abzugeben;
Löschen von jeglicher konfigurierter Downlink-Zuweisung und jeglicher Uplink-Genehmigung;
Löschen von jeglicher Ressource für einen gemeinsam genutzten physikalischen Uplink-Kanal, PUSCH, für eine semi-persistente Kanalzustandsinformations-, CSI-, Berichterstattung;
Behandeln anderer laufender Zeitgeber, die mit der UL-Synchronisation assoziiert sind, als abgelaufen;
Beibehalten von Uplink-Zeitsteuerungen aller Zeitsteuerungsanpassungsgruppen, TAGs;
Freigeben von PUCCH-CSI-Ressourcen, die in einem CSI-ReportConfig-Informationselement, IE, konfiguriert sind;
Freigeben von SchedulingRequestResourceConfig-Instanzen, die in einem PUCCH-Config-IE konfiguriert sind; oder
Freigeben von SRS-Resource-Instanzen, die in einem SRS-Config-IE konfiguriert sind.

5. Verfahren nach einem der vorhergehenden Ansprüche, wobei der SIB Satelliten-Ephemeriden-Informationen aufweist und das Verfahren ferner aufweist:
Bestimmen, dass die Satelliten-Ephemeriden-Informationen nach dem Ablauf des Gültigkeitszeitgebers ungültig sind.

6. Verfahren nach einem der vorhergehenden Ansprüche, wobei der SIB eine Vielzahl von gemeinsamen Zeitvorlauf-, TA-, Parametern aufweist und das Verfahren ferner aufweist:
Bestimmen, dass die gemeinsamen TA-Parameter nach dem Ablauf des Gültigkeitszeitgebers ungültig sind.

7. Verfahren nach einem der vorhergehenden Ansprüche, ferner aufweisend:
Auslösen einer Direktzugriffs-, RA-, Prozedur, um die UL-Synchronisation nach dem Ablauf des Gültigkeitszeitgebers wiederherzustellen.

8. Verfahren nach einem der vorhergehenden Ansprüche, wobei der SIB einen NTN-spezifischen SIB aufweist.

9. Nutzerendgerät (118, 700), UE, um eine Uplink-, UL-,Synchronisation in einem nicht-terrestrischen Netzwerk, NTN (110), beizubehalten, wobei das UE (118, 700) aufweist:
einen oder mehrere Prozessoren (728); und
zumindest einen Speicher (734), der mit zumindest einem des einen oder der mehreren Prozessoren (728) gekoppelt ist, wobei der zumindest eine Speicher (734) von einem Computer ausführbare Anweisungen (732) speichert, die, wenn sie von dem zumindest einen des einen oder der mehreren Prozessoren (728) ausgeführt werden, veranlassen, dass das UE (700) das Verfahren nach einem der Ansprüche 1 bis 8 durchführt.

## Revendications

1. Procédé réalisé par un équipement utilisateur (118, 700), UE, pour maintenir une synchronisation de liaison montante, UL, dans un réseau non terrestre, NTN (110), le procédé comprenant :
recevoir, à partir d'une station de base (112), BS, un bloc d'information système, SIB, indiquant une durée d'un temporisateur de validité pour la synchronisation UL dans le NTN (110) ;
déterminer si un temps d'époque est fourni dans le SIB ;
démarrer ou redémarrer le temporisateur de validité avec la durée à un moment déterminé selon que le temps d'époque est fourni dans le SIB, dans lequel le temporisateur de validité est démarré ou redémarré à une fin d'une sous-trame de référence indiquée par le temps d'époque dans un cas où le temps d'époque est fourni dans le SIB, et le temporisateur de validité est démarré ou redémarré à une fin d'une fenêtre d'information système, SI, pendant laquelle le SIB est reçu dans un cas où le temps d'époque n'est pas fourni dans le SIB ; et
déterminer que l'UE (118, 700) a perdu la synchronisation UL à l'expiration du temporisateur de validité.

2. Procédé selon la revendication précédente, comprenant en outre :
purger toutes les mémoires tampon de requête de répétition automatique hybride, HARQ, à l'expiration du temporisateur de validité.

3. Procédé selon l'une des revendications précédentes, dans lequel l'UE (118, 700) n'est pas autorisé à réaliser une transmission UL à l'expiration du temporisateur de validité.

4. Procédé selon l'une des revendications précédentes, comprenant en outre :
réaliser, à l'expiration du temporisateur de validité, au moins un parmi
notifier à une couche de contrôle des ressources radio, RRC, de l'UE (118, 700) de libérer un canal physique de contrôle de liaison montante, PUCCH, pour au moins une cellule de desserte ;
notifier à la couche RRC de l'UE (118, 700) de libérer un signal de référence de sondage, SRS, pour l'au moins une cellule de desserte ;
effacer toute attribution de liaison descendante configurée et toute autorisation de liaison montante configurée ;
effacer toute ressource de canal physique partagé de liaison montante, PUSCH, pour le rapport semi-persistant d'informations d'état de canal, CSI ;
traiter d'autres temporisateurs en cours d'exécution associés à la synchronisation UL comme expirés ;
maintenir des séquencements de liaison montante de tous les groupes d'alignement de séquencement, TAGS ;
libérer des ressources PUCCH-CSI configurées dans un élément d'information, IE, CSI-ReportConfig ;
libérer des instances SchedulingRequestResourceConfig configurées dans un IE PUCCH-Config ; ou
libérer des instances de ressources SRS configurées dans un IE SRS-Config.

5. Procédé selon l'une des revendications précédentes, dans lequel le SIB comprend des informations d'éphémérides satellites, et le procédé comprend en outre :
déterminer que les informations d'éphémérides satellites sont invalides à l'expiration du temporisateur de validité.

6. Procédé selon l'une des revendications précédentes, dans lequel le SIB comprend une pluralité de paramètres d'avance temporelle, TA, communs et le procédé comprend en outre :
déterminer que les paramètres TA communs sont invalides à l'expiration du temporisateur de validité.

7. Procédé selon l'une des revendications précédentes, comprenant en outre :
déclencher une procédure d'accès aléatoire, RA, pour reconstruire la synchronisation UL à l'expiration du temporisateur de validité.

8. Procédé selon l'une des revendications précédentes, dans lequel le SIB comprend un SIB spécifique à NTN.

9. Équipement utilisateur (118, 700), UE, pour maintenir une synchronisation de liaison montante, UL, dans un réseau non terrestre, NTN (110), l'UE (118, 700) comprenant :
un ou plusieurs processeurs (728) ; et
au moins une mémoire (734) couplée à au moins un des un ou plusieurs processeurs (728), dans lequel l'au moins une mémoire (734) stocke des instructions exécutables par ordinateur (732) qui, lorsqu'elles sont exécutées par l'au moins un des un ou plusieurs processeurs (728), amènent l'UE (700) à réaliser le procédé selon l'une des revendications 1 à 8.
